# EUROPÄISCHE PATENTSCHRIFT

(11) **EP 2 447 797 B1**
(45) Veröffentlichungstag und Bekanntmachung des Hinweises auf die Patenterteilung: **18.03.2015**
(21) Anmeldenummer: 11001901.5
(22) Anmeldetag: 08.03.2011
(51) Int. Cl.: G05B 19/409

(54) **Steuereinrichtung für eine Werkzeugmaschine**
Control device for a machine tool
Dispositif de commande pour machine-outil

(30) Priorität: 27.10.2010 CH 17852010
(43) Veröffentlichungstag der Anmeldung: 02.05.2012
(73) Patentinhaber: Fehlmann AG, 5703 Seon (CH)
(72) Erfinder: Schmid, Urs, 5000 Aarau (CH)
(74) Vertreter: Münch, Martin Walter

(56) Entgegenhaltungen:
- EP-A2- 0 405 251
- WO-A1-2004/018149
- DE-A1- 4 011 591
- DE-A1-102006 057 335
- FR-A1- 2 694 223

## Beschreibung

Die vorliegende Erfindung betrifft eine computergestützte Steuereinrichtung für eine Werkzeugmaschine zur Bearbeitung eines Werkstücks mit einem rotierenden Werkzeug, eine Werkzeugmaschine zur Bearbeitung eines Werkstücks mit einem rotierenden Werkzeug mit einer solchen Steuereinrichtung sowie Verfahren zum Betrieb einer Werkzeugmaschine gemäss den Oberbegriffen der unabhängigen Patentansprüche.

Werkzeugmaschinen mit computergestützten Maschinensteuerungen, so genannte CNC-Werkzeugmaschinen, werden in der Industrie für die mechanische Bearbeitung von Bauteilen aller Art eingesetzt. Bei diesen Maschinen erfolgt die Steuerung der verschiedenen Bearbeitungsachsen, der Drehzahl der Werkzeugspindel sowie etwaiger Werkzeugwechsel nach einem durch den Bediener vor dem eigentlichen Bearbeitungsprozess erstellten Bearbeitungsprogramm. Trotz der heute weit fortgeschrittenen Bedienerführung ist der Aufwand für die Erstellung eines CNC-Bearbeitungsprogramms immer noch relativ hoch und erfordert zudem fundierte CNC-Kenntnisse. Dies hat zur Folge, dass eine wirtschaftliche Fertigung mit den heute bekannten CNC-Werkzeugmaschinen nur mit hoch qualifiziertem Personal und nur für mittlere bis grosse Serien möglich ist, was den Einsatzbereich dieser Werkzeugmaschinen stark einschränkt und deren Besitzer von Grossaufträgen abhängig macht bzw. dazu zwingt, zusätzlich auch manuell gesteuerte Maschinen zu besitzen, mit denen die oftmals unter geringerem Preisdruck stehenden und damit potentiell lukrativen Kleinserienaufträge bedient werden können.

Aus DE 10 2006 057335 A1 und DE 40 11 591 A1 sind Werkzeugmaschinen bekannt, deren Maschinensteuerungen die Möglichkeit bieten, den das Bearbeitungswerkzeug tragenden Maschinenkopf wahlweise durch ein in der Maschinensteuerung gespeichertes Programm, durch manuelle Eingabe von Befehlen oder Daten oder manuell durch Bewegen eines Handrads oder eines Hebels entlang einer zur Rotationsachse des Werkzeugs parallelen Verschiebeachse zu verschieben. Aus WO 2004/018149 A1 ist eine Werkzeugmaschine mit einem feststehenden Maschinenkopf bekannt, deren Maschinensteuerungen die Möglichkeit bietet, den Aufspanntisch gegenüber dem das Bearbeitungswerkzeug tragenden Maschinenkopf wahlweise durch ein in der Maschinensteuerung gespeichertes Programm, durch manuelle Eingabe von Befehlen oder Daten oder manuell durch Bewegen eines Handrads oder eines Hebels entlang einer zur Rotationsachse des Werkzeugs parallelen Verschiebeachse zu verschieben.

Bei diesen Werkzeugmaschinen ist der manuelle Betriebsmodus im Wesentlichen dazu vorgesehen, gewisse manuelle Eingriffe beim automatisierten Bearbeiten von Werkstücken zu ermöglichen oder Bearbeitungsprogramme über einen so genannten Lernmodus zu erstellen. Repetitive Bohr- und Fräsarbeiten mit hoher Wiederholgenauigkeit sind im manuellen Modus mit diesen Werkzeugmaschinen nur mit grossem Aufwand bzw. hochqualifiziertem Personal möglich.Es stellt sich daher die Aufgabe, Vorrichtungen und Verfahren zur Verfügung zu stellen, welche die zuvor erwähnten Nachteile des Standes der Technik nicht aufweisen oder zumindest teilweise vermeiden.

Diese Aufgabe wird durch die Steuereinrichtung, die Werkzeugmaschine sowie die Verfahren zum Betrieb einer Werkzeugmaschine gemäss den unabhängigen Patentansprüchen gelöst.

Demgemäss betrifft ein erster Aspekt der Erfindung eine computergestützte Steuereinrichtung für eine Werkzeugmaschine zur Bearbeitung eines Werkstücks mit einem rotierenden Werkzeug, z.B. ein Fräswerkzeug oder ein Bohrer, bei welcher das Werkzeug in einem Maschinenkopf aufgenommen ist, der mittels einer motorischen Vorschubeinrichtung entlang einer parallel zu Rotationsachse des Werkzeugs verlaufenden Verschiebeachse verfahrbar ist, zum Verfahren des Werkzeugs entlang seiner Rotationsachse. Die erfindungsgemässe Steuereinrichtung umfasst einen Bildschirm zur Darstellung von steuerungsrelevanten Informationen (z.B. Koordinaten der jeweiligen Bearbeitungsachsen, Drehzahl des Werkzeugs, Vorschubgeschwindigkeit entlang einer Bearbeitungsachse, aktivierte Sonderbetriebsmodi, etc.), eine Eingabeeinheit zur Eingabe von steuerungsrelevanten Befehlen und/oder Daten (z.B. Weiterschalten im Programm, Eingabe von maximalen Verfahrwewegen entlang einer Bearbeitungsachse, Eingabe der Werkzeugdrehzahl, Eingabe einer Vorschubgeschwindigkeit, Programmierung eines CNC-Programms,etc.) sowie ein Betätigungsorgan, das von Hand ergriffen und bewegt werden kann. Auch umfasst die Steuereinrichtung Mittel zur Ansteuerung der Vorschubeinrichtung des Maschinenkopfes der mit der Steuerung auszurüstenden Werkzeugmaschine, zwecks Bewirkung eines Verfahrens des Maschinenkopfes entlang der Rotationsachse des Werkzeugs im Betrieb. Die Vorschubeinrichtung des Maschinenkopfes von CNC-Werkzeugmaschinen wird üblicherweise von einer mit einem elektrischen Servomotor angetriebenen Spindelanordnung gebildet. Entsprechend können die Mittel zur Ansteuerung der Vorschubeinrichtung des Maschinenkopfes beispielsweise lediglich in einem Dateninterface bestehen, mittels welchem eine separate Steuerungsanordnung des Antriebsmotors einer Vorschubeinrichtung für den Maschinenkopf ansteuerbar ist, oder sie können auch die eigentliche Antriebsmotorsteuerung und gegebenenfalls sogar den Antriebsmotor der Vorschubeinrichtung für den Maschinenkopf mitumfassen.

Dabei ist die Steuereinrichtung derartig ausgebildet, dass die Ansteuerung der Vorschubeinrichtung des Maschinenkopfes mittels der Mittel zur Ansteuerung der Vorschubeinrichtung des Maschinenkopfes zum Verfahren desselben entlang einer parallel zur Rotationsachse des Werkzeugs verlaufenden Verschiebeachse wahlweise durch ein in der Steuereinrichtung gespeichertes Programm, durch manuelle Eingabe von Befehlen und/oder Daten in die Eingabeeinheit oder manuell durch Bewegen des Betätigungsorgans erfolgen kann.

Des weiteren ist die Steuereinrichtung derartig ausgebildet, dass sie wahlweise einen Betriebsmodus zur Verfügung stellt, in welchem der Maschinenkopf von einer definierten Ausgangsposition durch Bewegen des Betätigungsorgans für das Verfahren des Maschinenkopfes entlang einer parallel zur Rotationsachse des Werkzeugs verlaufenden Verschiebeachse lediglich über einen zuvor über die Eingabeeinheit eingegebenen Verschiebeweg verschiebbar ist. Die Steuereinrichtung stellt also in dieser Ausführungsform einen "elektronischen Anschlag" für das Verfahren des Maschinenkopfes entlang einer parallel zur Rotationsachse des Werkzeugs verlaufenden Verschiebeachse zur Verfügung und ermöglicht somit z.B. auf einfache Weise das Einbringen von mehreren Bohrungen identischer Tiefe in ein Werkstück im manuellen Betrieb.

Durch die erfindungsgemässe Ausgestaltung der Steuerungseinrichtung wird es möglich, eine CNC-Werkzeugmaschine zur Verfügung zu stellen, welche wirtschaftlich sowohl für die Fertigung mittlerer und grosser Serien im CNC-Betrieb einzusetzen ist als auch in der Kleinserienfertigung und im Prototypenbau im manuellen Betrieb. Auch wird hierdurch die Möglichkeit eröffnet, eine CNC-Werkzeugmaschine zur Verfügung zu stellen, welche unterschiedliche Betriebsweisen für Mitarbeitern unterschiedlicher Qualifikation bereitstellt.

In einer bevorzugten Ausführungsform der Steuereinheit sind der Bildschirm, die Eingabeeinheit und das Betätigungsorgan für das Verfahren des Maschinenkopfes entlang einer parallel zur Rotationsachse des Werkzeugs verlaufenden Verschiebeachse von einer zusammenhängenden Bedieneinheit gebildet. Auf diese Weise ergibt sich eine besonders kompakte Steuereinheit, welche eine Bedienung der mit ihr zu versehenden Werkzeugmaschine in allen Betriebsarten von einer einzigen Bedienposition aus ermöglicht.

Dabei ist das Betätigungsorgan für das Verfahren des Maschinenkopfes entlang einer parallel zur Rotationsachse des Werkzeugs verlaufenden Verschiebeachse bevorzugterweise auf einer der beiden Seiten der Bedieneinheit, bevorzugterweise auf der rechten Seite der Bedieneinheit angeordnet. Da bei klassischen manuellen Bohrwerken das Drehkreuz zur Betätigung der Pinole typischerweise auf der rechten Seite der Maschine angeordnet ist, wird hierdurch im manuellen Betrieb eine ähnliche Bedienung wie bei klassischen Bohrwerken erreicht.

Insbesondere für den Fall, das das Betätigungsorgan zudem derart ausgebildet, dass es um eine zur Front der Bedieneinheit parallele, horizontale Achse verschwenk- oder verdrehbar ist, was weiter bevorzugt ist, wird im manuellen Betriebsmodus ein Bedienungsablauf möglich, der sehr ähnlich wie der bei klassischen manuellen Bohrwerken ist.

In einer weiteren bevorzugten Ausführungsform der Steuereinrichtung ist das Betätigungsorgan für das Verfahren des Maschinenkopfes entlang einer parallel zur Rotationsachse des Werkzeugs verlaufenden Verschiebeachse ausgehend von einer Ausgangsposition entgegen einer Rückstellkraft bis in eine Endposition bewegbar und kehrt bei einem Fehlen von Betätigungskräften durch die Rückstellkraft wieder in die Ausgangsposition zurück. Auch dies ist ein typisches Element bei klassischen manuellen Bohrwerken und begünstigt dadurch weiter eine intuitive Bedienung wie bei den klassischen manuellen Bohrwerken.

In noch einer weiteren bevorzugten Ausführungsform der Steuereinrichtung ist das Betätigungsorgan für das Verfahren des Maschinenkopfes entlang einer parallel zur Rotationsachse des Werkzeugs verlaufenden Verschiebeachse ein Hebel, der verdreh- bzw. verschwenkkbar ist, wobei es weiter bevorzugt ist, dass der Hebel von einem um eine Rotationsachse verdrehbaren Drehkreuz gebildet ist. Hierdurch lässt sich in Kombination mit einigen der zuvor erwähnten bevorzugten Bedienungsmerkmalen im manuellen Betrieb eine Bedienung realisieren, welche derjenigen eines klassischen manuellen Bohrwerks sehr nahe kommt.

Weiter ist es bevorzugt, dass die Steuereinrichtung derartig ausgebildet ist, dass in dem wahlweisen Betriebsmodus, in welchem der Maschinenkopf von einer definierten Ausgangsposition durch Bewegen des Betätigungsorgans für das Verfahren des Maschinenkopfes entlang einer parallel zur Rotationsachse des Werkzeugs verlaufenden Verschiebeachse lediglich über einen zuvor über die Eingabeeinheit eingegebenen Verschiebeweg verschiebbar ist, nach dem Verfahren des Maschinenkopfes über den eingegebenen Verschiebeweg durch Bewegen des Betätigungsorgans das Betätigungsorgan in derselben Betätigungsrichtung weiter bis in eine Endposition bewegbar ist, in welcher seine Bewegung dann durch einen Anschlag begrenzt oder durch erhöhte Betätigungskräfte erschwert wird.

Dabei kann der Maschinenkopf in diesem wahlweisen Modus durch ein Zurückbewegen des Betätigungsorgans von der erreichten Endposition in umgekehrter Betätigungsrichtung, insbesondere in die ursprüngliche Position des Betätigungsorgans, zurück in seine Ausgangsposition bewegt werden.

Durch ein erneutes Bewegen des Betätigungsorgans in der Betätigungsrichtung bis in die Endposition kann in diesem wahlweisen Modus der Maschinenkopf sodann erneut von der Ausgangsposition über den eingegebenen Verschiebeweg verfahren werden, wobei die Steuereinrichtung den Maschinenkopf jedoch jetzt derart steuert, dass er diesen Verschiebeweg erst dann zurückgelegt hat, wenn das Betätigungsorgan für das Verfahren des Maschinenkopfes entlang einer parallel zur Rotationsachse des Werkzeugs verlaufenden Verschiebeachse die Endposition erreicht hat. Dadurch, dass in diesem Betriebsmodus der gewünschte Verschiebeweg bei der zweiten und jeder weiteren Bewegung des Betätigungselements erst dann erreicht ist, wenn die Bewegung des Betätigungselement in der Endposition durch einen Anschlag begrenzt oder durch erhöhte Betätigungskräfte erschwert wird, erhält der Bediener eine taktile Rückmeldung darüber, dass er den gewünschten und dabei auch den maximal möglichen Vorschubweg des Maschinenkopfes entlang der Rotationsachse des Werkzeugs erreicht hat und den nächsten Bearbeitungsschritt einleiten kann. Insbesondere für die Einbringung von mehreren Bohrungen identischer Tiefe in ein Werkstück ist dieser wahlweise Betriebsmodus besonders Vorteilhaft, weil sich hierdurch ab der zweiten Bohrung eine Bedienungsweise wie bei klassischen Bohrwerken mit mechanischem Anschlag ergibt.

In noch einer weiteren bevorzugten Ausführungsform ist die Steuereinrichtung derartig ausgebildet, dass in dem wahlweisen Betriebsmodus, in welchem der Maschinenkopf von einer definierten Ausgangsposition durch Bewegen des Betätigungsorgans für das Verfahren des Maschinenkopfes entlang einer parallel zur Rotationsachse des Werkzeugs verlaufenden Verschiebeachse lediglich über einen zuvor über die Eingabeeinheit eingegebenen Verschiebeweg verschiebbar ist, nach einem Verschieben über diesen Verschiebeweg durch Bewegen des Betätigungsorgans bei einem anschliessenden Zurückbewegen des Betätigungsorgans in umgekehrter Betätigungsrichtung in der am Ende des Verschiebewegs erreichten Verschiebeposition verbleibt. Dieser Betriebsmodus ist dann vorteilhaft, wenn mit einer mit der Steuereinrichtung versehenen Werkzeugmaschine im manuellen Betrieb Fräsarbeiten mit dem Fräswerkzeug angeordnet an einer bestimmten Verschiebeposition des Maschinenkopfes durchgeführt werden sollen, wie z.B. beim Planfräsen eines Werkstückes.

In noch einer weiteren bevorzugten Ausführungsform ist die Steuereinrichtung derartig ausgebildet, dass in dem wahlweisen Betriebsmodus, in welchem der Maschinenkopf von einer definierten Ausgangsposition durch Bewegen des Betätigungsorgans für das Verfahren des Maschinenkopfes entlang einer parallel zur Rotationsachse des Werkzeugs verlaufenden Verschiebeachse lediglich über einen zuvor über die Eingabeeinheit eingegebenen Verschiebeweg verschiebbar ist, nach einem Verschieben entlang dieses Verschiebewegs durch Bewegen des Betätigungsorgans bei einem Zurückbewegen des Betätigungsorgans in umgekehrter Betätigungsrichtung in umgekehrter Richtung verschoben wird für den Fall, dass der eingegebene Verschiebeweg noch nicht erreicht wurde, oder in der erreichten Verschiebeposition verbleibt für den Fall, dass der eingegebene Verschiebeweg erreicht wurde. Mit einem derartigen Betriebsmodus ist es möglich, wie bei einem klassischen manuellen Fräswerk unter wiederholtem Eintauchen mit dem Werkzeug in einem Werkstück eine Ausfräsung bis auf eine Solltiefe zu erzeugen, wobei dann aber bei Erreichen der Solltiefe das Werkzeug automatisch in der erreichten Verschiebeposition verbleib und sodann der eigentliche Fräsvorgang durchgeführt werden kann.

In noch einer weiteren bevorzugten Ausführungsform ist die Steuereinrichtung ausgestaltet für eine Werkzeugmaschine, bei welcher eine Relativbewegung zwischen Werkstück und Werkzeug entlang zweier unter einem insbesondere rechten Winkel zueinander und unter einem insbesondere rechten Winkel zur Rotationsachse des Werkzeugs verlaufender Verschiebeachsen mittels motorischer Vorschubeinrichtungen bewirkbar ist. Derartige Werkzeugmaschinen sind beispielsweise 3- oder mehrachsige CNC-Werkzeugmaschinen. Dabei umfasst die Steuereinrichtung zwei Betätigungselemente, von denen jedes einer der beiden Verschiebeachsen der mit der Steuerung auszurüstenden Werkzeugmaschine zugeordnet ist und welche von Hand ergriffen und bewegt werden können. Dabei weist die Steuereinrichtung zusätzlich Mittel zur Ansteuerung der Vorschubeinrichtungen für die zuvor genannten zwei Verschiebeachsen auf und ist derartig ausgebildet, dass die Ansteuerung dieser Vorschubeinrichtungen zwecks Bewirkung der Relativbewegungen zwischen Werkstück und Werkzeug je Verschiebeachse wahlweise durch ein in der Steuereinrichtung gespeichertes Programm, durch manuelle Eingabe von Befehlen und/oder Daten in die Eingabeeinheit oder manuell durch Bewegen des zugeordneten Betätigungselements erfolgen kann.

Insbesondere für den Fall, dass die Betätigungselemente als Handräder ausgebildet sind, was bevorzugt ist, ergibt sich der Vorteil, dass eine manuelle Bedienung ähnlich wie bei klassischen manuellen Fräsmaschinen möglich wird.

Hierzu ist es von Vorteil, dass der Bildschirm, die Eingabeeinheit, das Betätigungsorgan und die Betätigungselemente von einer zusammenhängenden Bedieneinheit gebildet sind, so dass sich eine kompakte Steuereinheit ergibt, welche eine Bedienung der mit ihr zu versehenden Werkzeugmaschine in allen Betriebsarten von einer einzigen Bedienposition aus ermöglicht.

Auch ist es dabei bevorzugt, dass von den beiden Betätigungselementen für die beiden Verschiebeachsen ein erstes Betätigungselement auf einer der beiden Seiten der Bedieneinheit, bevorzugterweise auf der rechten Seite der Bedieneinheit, drehbar um eine zur Front der Bedieneinheit parallele, horizontale Achse angeordnet ist und das zweite Betätigungselement auf der Front der Bedienungseinheit drehbar um eine zu einer Seite der Bedieneinheit parallele, horizontale Achse angeordnet ist. Da bei manuellen Fräswerken die Drehknöpfe zum Verfahren des Maschinentisches typischerweise auf der rechten Seite und an der Front des Maschinentisches angeordnet sind, wird hierdurch im manuellen Betrieb eine Bedienung ähnlich wie bei klassischen Fräsmaschinen ermöglicht.

Sind dabei die beiden Betätigungselemente für die beiden Verschiebeachsen bevorzugterweise auf gleicher Höhe im Bereich des unteren Endes der Bedieneinheit angeordnet und ist das Betätigungsorgan für die Verschiebung des Maschinenkopfes entlang der Rotationsachse des Werkzeugs im Bereich des oberen Endes der Bedieneinheit angeordnet, was weiter bevorzugt ist, so wird im manuellen Betrieb ein Bedienungsablauf möglich, welchem dem bei klassischen manuellen Fräswerken sehr ähnlich ist.

Eine Bedieneinheit für eine Steuereinrichtung gemäss dem ersten Aspekt der Erfindung ist bevorzugterweise als zusammenhängende Einheit ausgebildet, die den Bildschirm, die Eingabeeinheit, das Betätigungsorgan für das Verfahren des Maschinenkopfes entlang einer parallel zur Rotationsachse des Werkzeugs verlaufenden Verschiebeachse und, falls vorhanden, die beiden Betätigungselemente für die Bewirkung der Relativbewegung zwischen Werkstück und Werkzeug entlang den beiden anderen Verschiebeachsen bereitstellt.

Ein zweiter Aspekt der Erfindung betrifft eine Werkzeugmaschine zur Bearbeitung eines Werkstücks mit einem rotierenden Werkzeug mit einer Steuereinrichtung gemäss dem ersten Aspekt der Erfindung. Die Werkzeugmaschine weist einen Maschinenkopf auf, in welchem ein Werkzeug rotierbar aufgenommen bzw. aufnehmbar ist. Der Maschinenkopf ist durch die Steuereinrichtung mittels einer mit der Steuereinrichtung ansteuerbaren Vorschubeinrichtung wahlweise durch ein in der Steuereinrichtung gespeichertes Programm, durch manuelle Eingabe von Befehlen und/oder Daten in die Eingabeeinheit oder manuell durch Bewegen des Betätigungsorgans entlang einer parallel zur Rotationsachse des Werkzeugs verlaufenden Verschiebeachse verschiebbar, zum Verschieben der Werkzeugs entlang seiner Rotationsachse.

Mit anderen Worten betrifft der zweite Aspekt der Erfindung also eine Werkzeugmaschine mit einer computergestützten Steuerungseinheit zur Bearbeitung eines Werkstücks mit einem rotierenden Werkzeug, bei welcher das Werkzeug in einem Maschinenkopf aufgenommen ist, der mittels einer insbesondere motorischen Vorschubeinrichtung entlang einer parallel zur Rotationsachse des Werkzeugs verlaufenden Verschiebeachse bzw. entlang der Rotationsachse des Werkzeugs verfahrbar ist. Dabei umfasst die Steuerungseinrichtung der Werkzeugmaschine einen Bildschirm zur Darstellung von steuerungsrelevanten Informationen, eine Eingabeeinheit zur Eingabe von steuerungsrelevanten Befehlen und/oder Daten und ein Betätigungsorgan, das von Hand ergriffen und bewegt werden kann, und ist derartig ausgebildet, dass die Ansteuerung der Vorschubeinrichtung zum Verschieben des Maschinenkopfes entlang einer parallel zur Rotationsachse des Werkzeugs verlaufenden Verschiebeachse wahlweise durch ein in der Steuereinrichtung gespeichertes Programm, durch manuelle Eingabe von Befehlen und/oder Daten in die Eingabeeinheit oder manuell durch Bewegen des Betätigungsorgans erfolgen kann. Des weiteren ist die Steuereinrichtung derartig ausgebildet, dass sie wahlweise einen Betriebsmodus zur Verfügung stellt, in welchem der Maschinenkopf von einer definierten Ausgangsposition durch Bewegen des Betätigungsorgans für das Verfahren des Maschinenkopfes entlang einer parallel zur Rotationsachse des Werkzeugs verlaufenden Verschiebeachse lediglich über einen zuvor über die Eingabeeinheit eingegebenen Verschiebeweg verschiebbar ist. Die Steuereinrichtung stellt also in dieser Ausführungsform einen "elektronischen Anschlag" für das Verfahren des Maschinenkopfes entlang einer parallel zur Rotationsachse des Werkzeugs verlaufenden Verschiebeachse zur Verfügung und ermöglicht somit z.B. auf einfache Weise das Einbringen von mehreren Bohrungen identischer Tiefe in ein Werkstück im manuellen Betrieb.

Mit der erfindungsgemässen Werkzeugmaschine können auf wirtschaftliche Weise sowohl mittlere und grosse Serien im CNC-Betrieb bearbeitet werden als auch Kleinserien und Prototypen im manuellen Betrieb. Auch kann die Maschine von Mitarbeitern unterschiedlicher Qualifikation in unterschiedlichen Betriebsarten bedient werden.

In einer bevorzugten Ausführungsform der Werkzeugmaschine weist die Werkzeugmaschine einen Maschinentisch auf, welcher zur Bewirkung einer Relativbewegung zwischen einem darauf aufzuspannenden Werkstück und einem im Maschinenkopf angeordneten Werkzeug entlang zweier unter einem rechten Winkel zueinander und unter einem rechten Winkel zur Rotationsachse des Werkzeugs verlaufender Verschiebeachsen mittels motorischer Vorschubeinrichtungen verschiebbar ist.

Die Steuereinrichtung der Werkzeugmaschine weist zusätzlich zu dem Betätigungsorgan für das manuelle Verfahren des Maschinenkopfes entlang einer parallel zur Rotationsachse des Werkzeugs verlaufenden Verschiebachse auch zwei Betätigungselemente auf, von denen jedes einer der beiden Verschiebeachsen des Maschinentisches zugeordnet ist und welche von Hand ergriffen und bewegt werden können. Dabei weist die Steuereinrichtung Mittel zur Ansteuerung der Vorschubeinrichtungen der Verschiebeachsen des Maschinentisches auf und ist derartig ausgebildet, dass die Ansteuerung dieser Vorschubeinrichtungen der beiden Verschiebeachsen des Maschinentisches zwecks Verschiebung des Maschinentisches zur Bewirkung einer Relativbewegungen zwischen Werkstück und Werkzeug je Verschiebeachse wahlweise durch ein in der Steuereinrichtung gespeichertes Programm, durch manuelle Eingabe von Befehlen und/oder Daten in die Eingabeeinheit oder manuell durch Bewegen des zugeordneten Betätigungselements erfolgen kann.

Diese erfindungsgemässe Werkzeugmaschine entspricht von ihren Bearbeitungsachsen her dem klassischen dreiachsigen Maschinenkonzept, mit einem entlang einer vertikalen Achse (Z-Achse) verfahrbaren Maschinenkopf und einem entlang zweier horizontaler Achsen (X-Achse, Y-Achse) verfahrbaren Maschinentisch.

In einer anderen bevorzugten Ausführungsform der Werkzeugmaschine umfasst diese wiederum eine Steuereinrichtung, welche zusätzlich zu dem Betätigungsorgan für das manuelle Verfahren des Maschinenkopfes entlang einer parallel zu Rotationsachse des Werkzeugs verlaufenden Verschiebeachse auch zwei Betätigungselemente für die Bewirkung der Relativbewegung zwischen Werkstück und Werkzeug entlang zweier senkrecht zueinander und senkrecht zur Rotationsachse der Werkzeugs verlaufenden Verschiebeachsen mittels Ansteuerung von diesen Verschiebeachsen zugeordneter motorischer Vorschubeinrichtungen bereitstellt. Im Gegensatz zur vorherigen Ausführungsform weist die Werkzeugmaschine hier jedoch einen Maschinentisch auf, der mit der Steuereinrichtung wahlweise durch ein in der Steuereinrichtung gespeichertes Programm, durch manuelle Eingabe von Befehlen und/oder Daten in die Eingabeeinheit oder manuell durch Bewegen eines der beiden Betätigungselemente entlang nur einer unter einem rechten Winkel zur Rotationsachse des Werkzeugs verlaufenden Verschiebeachse verschiebbar ist und bei welcher der Maschinenkopf mit der Steuereinrichtung wahlweise durch ein in der Steuereinrichtung gespeichertes Programm, durch manuelle Eingabe von Befehlen und/oder Daten in die Eingabeeinheit oder durch Bewegen des anderen Betätigungselements entlang einer unter einem rechten Winkel zur Rotationsachse des Werkzeugs und unter einem rechten Winkel zur Verschiebeachse des Maschinentisches verlaufenden Verschiebeachse verschiebbar ist. Der Maschinentisch ist also nur entlang einer einzigen horizontalen Verschiebeachse verschiebbar. Durch diese Bausweise kann die Maschine besonders kompakt gestaltet werden.

Weiter ist es bei der erfindungsgemässen Werkzeugmaschine bevorzugt, dass die Steuereinrichtung eine Bedieneinheit aufweist, welche den Bildschirm, die Eingabeeinheit, das Betätigungsorgan für das Verfahren des Maschinenkopfes entlang einer parallel zu Rotationsachse des Werkzeugs verlaufenden Verschiebeachse und, falls vorhanden, die beiden Betätigungselemente für die beiden senkrecht zueinander und zur Rotationsachse der Werkzeugs verlaufenden Verschiebeachsen bildet, und dass die Bedieneinheit derartig positioniert oder positionierbar ist, dass der Bediener beim Bedienen der Bedieneinheit den zwischen dem Maschinentisch und dem Bearbeitungskopf gebildeten Bearbeitungsraum visuell überwachen kann. Hierdurch lässt sich ein guter Bedienungskomfort erzielen.

Ein dritter Aspekt der Erfindung betrifft ein Verfahren zum Betrieb einer Werkzeugmaschine gemäss dem zweiten Aspekt der Erfindung. Dabei werden mehrere identische Bohrungen in einem auf dem Maschinentisch der Werkzeugmaschine aufgespannten Werkstück erzeugt. Die Maschine ist eine drei- oder mehrachsige CNC-Maschine bei welcher über die Steuereinrichtung eine Relativbewegung zwischen einem auf dem Maschinentisch aufgespannten Werkstück und einem im Maschinenkopf aufgenommenen Werkzeug entlang zweier senkrecht zueinander und senkrecht zur Rotationsachse des Werkzeugs verlaufender Verschiebeachsen bewirkbar ist. Hierfür weist die Steuereinrichtung unter anderem zwei Betätigungselemente auf, von denen jedes einer der beiden Verschiebeachsen zugeordnet ist und welche von Hand ergriffen und bewegt werden können.

Zuerst wird eine gewünschte erste Bohrposition über dem Werkstück wahlweise durch ein in der Steuereinrichtung gespeichertes Programm, durch manuelle Eingabe von Befehlen und/oder Daten in die Eingabeeinheit oder manuell durch Bewegen mindestens eines der beiden Betätigungselemente angefahren.

Sodann wird ein im Maschinenkopf aufgenommenes Bohrwerkzeugs durch Verschieben des Maschinenkopfes entlang der Rotationsachse des Werkzeugs infolge eines Bewegens des Betätigungsorgans für das Verfahren des Maschinenkopfes entlang einer parallel zu Rotationsachse des Werkzeugs verlaufenden Verschiebeachse auf dem Werkstück aufgesetzt.

Die Verschiebeposition des Maschinenkopfes bei aufgesetztem Bohrwerkzeug wird gespeichert, bevorzugterweise als Referenzposition für die Bohrtiefe "Null", und es wird eine gewünschte Bohrtiefe über die Eingabeeinheit eingegeben, bevorzugterweise als Verschiebeweg ausgehend von der gespeicherten Verschiebeposition des Maschinenkopfes bei aufgesetztem Bohrwerkzeug.

Sodann wird an der ersten Bohrposition durch Bewegen des Betätigungsorgans für das Verfahren des Maschinenkopfes entlang einer parallel zu Rotationsachse des Werkzeugs verlaufenden Verschiebeachse in eine Betätigungsrichtung eine erste Bohrung in das Werkstück eingebracht. Dabei wird die Verschiebebewegung des Maschinenkopfes bei Erreichen der eingegebenen Bohrtiefe von der Steuereinrichtung gestoppt, während das Betätigungsorgan weiter in der Betätigungsrichtung bewegt wird, bis seine Bewegung in einer Endposition von einem Anschlag begrenzt wird oder durch erhöhte Betätigungskräfte erschwert wird.

Durch Bewegen des Betätigungsorgans für das Verfahren des Maschinenkopfes entlang einer parallel zu Rotationsachse des Werkzeugs verlaufenden Verschiebeachse von der Endposition in einer der Betätigungsrichtung entgegen gesetzten Richtung wird der Maschinenkopf dann zurückverschoben bis das Bohrwerkzeug vollständig aus dem gebohrten ersten Loch entfernt und über dem Werkstück angeordnet ist.

Anschliessend wird eine gewünschte zweite Bohrposition angefahren, ebenfalls wahlweise durch ein in der Steuereinrichtung gespeichertes Programm, durch manuelle Eingabe von Befehlen und/oder Daten in die Eingabeeinheit oder manuell durch Bewegen mindestens eines der beiden Betätigungselemente.

An der zweiten Bohrposition wird sodann, durch erneutes Bewegen des Betätigungsorgans in der Betätigungsrichtung bis in die Endposition, eine zweite Bohrung in das Werkstück eingebracht, wobei die Verschiebebewegung des Maschinenkopfes von der Steuerungseinrichtung nun derartig gesteuert wird, dass die eingegebene Bohrtiefe bei dieser Bohrung erst dann erreicht ist, wenn das Betätigungsorgan für das Verfahren des Maschinenkopfes entlang einer parallel zu Rotationsachse des Werkzeugs verlaufenden Verschiebeachse die Endposition erreicht hat.

Für etwaige weitere Bohrungen werden die beiden zuletzt beschriebenen Schritte jeweils sinngemäss wiederholt.

Dadurch, dass die gewünschte Bohrtiefe bei der zweiten und jeder weiteren Bohrung erst dann erreicht ist, wenn die Bewegung des Betätigungselement in der Endposition durch einen Anschlag begrenzt oder durch erhöhte Betätigungskräfte erschwert wird, erhält der Bediener eine taktile Rückmeldung, dass die gewünschte und dabei auch maximal mögliche Bohrtiefe erreicht ist und die nächste Bohrposition angefahren werden kann. Insbesondere für die Einbringung von mehreren Bohrungen identischer Tiefe in ein Werkstück ist dieses Verfahren besonders vorteilhaft, weil sich hierdurch eine Bedienungsweise wie bei klassischen Bohrwerken mit mechanischem Anschlag ergibt.

In einer bevorzugten Ausführungsform des Verfahrens gemäss dem dritten Aspekt der Erfindung werden zumindest die zweite Bohrposition und allfällige weitere Bohrpositionen durch ein in der Steuereinrichtung gespeichertes Programm angefahren, wobei das Anfahren der jeweils nächsten Bohrposition durch Eingabe eines Befehls über die Eingabeeinheit und/oder durch Erreichen einer bestimmten Verschiebeposition des Maschinenkopfes beim Zurückverschieben nach dem Einbringen der vorherigen Bohrung in das Werkstück ausgelöst wird. Hierdurch kann eine besonders rationelle Bearbeitung von Kleinserien erreicht werden.

Ein vierter Aspekt der Erfindung betrifft noch ein Verfahren zum Betrieb einer Werkzeugmaschine gemäss dem zweiten Aspekt der Erfindung. Dabei werden Fräsarbeiten an einem auf dem Maschinentisch der Werkzeugmaschine aufgespannten Werkstück durchgeführt.

Die Maschine ist wiederum eine drei- oder mehrachsige CNC-Maschine bei welcher über die Steuereinrichtung eine Relativbewegung zwischen einem auf dem Maschinentisch aufgespannten Werkstück und einem im Maschinenkopf aufgenommenen Werkzeug entlang zweier senkrecht zueinander und senkrecht zur Rotationsachse des Werkzeugs verlaufender Verschiebeachsen bewirkbar ist. Hierfür weist die Steuereinrichtung unter anderem zwei Betätigungselemente auf, von denen jedes einer der beiden Verschiebeachsen zugeordnet ist und welche von Hand ergriffen und bewegt werden können.

Zuerst wird ein im Maschinenkopf aufgenommenes Fräswerkzeug durch Verschieben des Maschinenkopfes entlang der Rotationsachse des Werkzeugs infolge eines Bewegens des Betätigungsorgans auf dem Werkstück aufgesetzt.

Die Verschiebeposition des Maschinenkopfes bei aufgesetztem Fräswerkzeug wird gespeichert, bevorzugterweise als Referenzposition für die Frästiefe "Null", und es wird eine gewünschte Frästiefe über die Eingabeeinheit eingegeben, bevorzugterweise als Verschiebeweg ausgehend von der gespeicherten Verschiebeposition des Maschinenkopfes bei aufgesetztem Fräswerkzeug.

Sodann wird eine gewünschte Fräsposition über dem Werkstück oder eine Position neben dem Werkstück angefahren, wahlweise durch ein in der Steuereinrichtung gespeichertes Programm, durch manuelle Eingabe von Befehlen und/oder Daten in die Eingabeeinheit oder manuell durch Bewegen mindestens eines der beiden Betätigungselemente.

Anschliessend wird der Maschinenkopf, gegebenenfalls unter einem Eintauchen des Fräswerkzeuges in das Werkstück, durch Bewegen des Betätigungsorgans für das Verfahren des Maschinenkopfes entlang einer parallel zu Rotationsachse des Werkzeugs verlaufenden Verschiebeachse in eine Betätigungsrichtung auf das Werkstück zu verschoben. Bei Erreichen der eingegebenen Frästiefe wird die Verschiebebewegung des Maschinenkopfes von der Steuereinrichtung gestoppt.

Nun wird das Betätigungsorgan in einer der Betätigungsrichtung entgegen gesetzten Richtung bewegt, wobei jedoch der Maschinenkopf in der Verschiebeposition, in welcher seine Verschiebebewegung von der Steuereinrichtung gestoppt wurde, verbleibt.

Mit dem Maschinenkopf angeordnet in dieser Verschiebeposition werden sodann Fräsarbeiten durch Erzeugen einer Relativbewegung zwischen Werkzeug und Werkstück durchgeführt, wobei die Relativbewegung wahlweise durch ein in der Steuereinrichtung gespeichertes Programm, durch manuelle Eingabe von Befehlen und/oder Daten in die Eingabeeinheit oder manuell durch Bewegen mindestens eines der beiden Betätigungselemente gesteuert wird.

Diese Verfahren eignet sich besonders zum Planfräsen einzelner Werkstücke und für die Bearbeitung von einfachen, zweidimensionalen Fräskonturen.

Weitere bevorzugte Ausführungsformen der Erfindung ergeben sich aus den abhängigen Ansprüchen und aus der nun folgenden Beschreibung anhand der Figuren. Dabei zeigen:
Fig. 1 eine perspektivische Darstellung einer ersten erfindungsgemässen Werkzeugmaschine; und
Fig. 2 eine perspektivische Darstellung einer zweiten erfindungsgemässen Werkzeugmaschine.

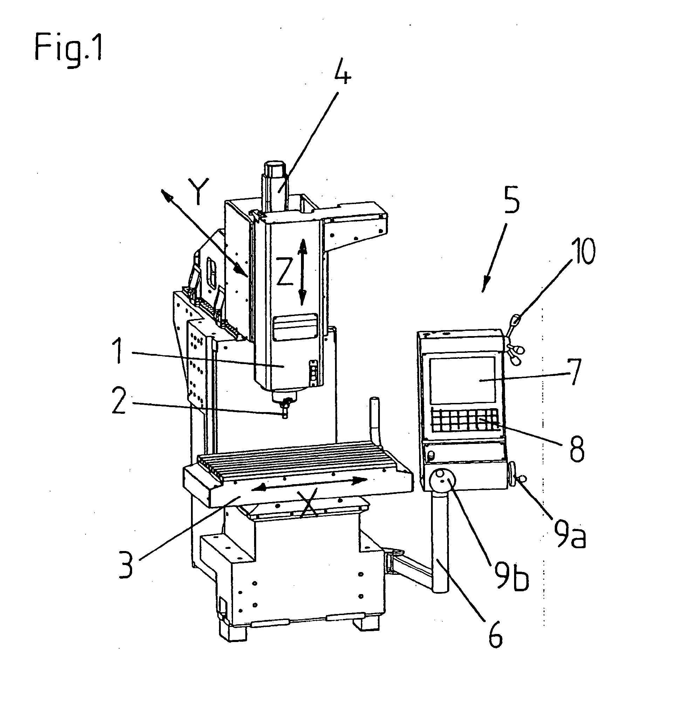

Der Grundaufbau einer ersten erfindungsgemässen Werkzeugmaschine in Form einer dreiachsigen CNC-Bearbeitungsmaschine ist in Fig. 1 in einer perspektivischen Ansicht dargestellt. Wie zu erkennen ist, umfasst die Werkzeugmaschine einen Maschinenkopf 1, in welchem ein Fräswerkzeug 2 mittels eines Antriebsmotors (nicht gezeigt) rotierbar um seine Längsachse aufgenommen ist. Unterhalb der Maschinenkopfes 1 ist ein Maschinentisch 3 angeordnet, zur Aufnahme eines mit dem Werkzeug 2 zu bearbeitenden Werkstücks (nicht gezeigt). Der Maschinentisch 3 ist horizontal entlang einer zu seiner Längsachse parallelen Verschiebeachse X mittels einer motorischer Vorschubeinrichtungen nach rechts und links verschiebbar (siehe Pfeile). Der Maschinenkopf 1 mit dem darin aufgenommenen und mit diesem antreibbaren Werkzeug 2 ist mittels einer motorischen Vorschubeinrichtung, deren Antriebsmotor 4 oben an der Maschine sichtbar ist, entlang einer parallel zur Rotationsachse des Werkzeugs 2 verlaufenden Verschiebeachse Z auf den Maschinentisch 3 zu und von diesem weg verfahrbar (siehe Pfeile). Auch ist der Maschinenkopf 1 horizontal entlang einer zu der Verschiebeachse X des Maschinentisches rechtwinklig verlaufenden Verschiebeachse Y mittels einer motorischer Vorschubeinrichtungen vor und zurück verschiebbar (siehe Pfeile).

Weiter umfasst die Werkzeugmaschine eine computergestützte Steuereinrichtung gemäss dem zuvor beschriebenen ersten Aspekt der Erfindung zur Steuerung des Werkzeugantriebs und der Verschiebebewegungen des Maschinenkopfes 1 und des Maschinentisches 3 entlang der Verschiebeachsen X, Y, Z.

Die Steuereinrichtung umfasst eine Bedieneinheit 5, welche auf einem Tragarm 6 schwenkbar vor der Werkzeugmaschine angeordnet ist. Hierdurch ist die Bedieneinheit 5 in jeder Bearbeitungssituation derartig positionierbar, dass der Bediener beim Bedienen der Bedieneinheit 5 den zwischen dem Maschinentisch 3 und dem Bearbeitungskopf 1 gebildeten Bearbeitungsraum visuell überwachen kann.

Die Bedieneinheit 5 umfasst einen Bildschirm 7 zur Darstellung von steuerungsrelevanten Informationen und ein Tastenfeld 8 zur Eingabe von steuerungsrelevanten Befehlen und/oder Daten (anspruchsgemässe Eingabeeinheit), sowie zwei Handräder 9a, 9b (anspruchsgemässe Betätigungselemente) und ein Drehkreuz 10 (anspruchsgemässes Betätigungsorgan).

Das Drehkreuz 10 ist oben auf der rechten Seite der Bedieneinheit 5 angeordnet und um eine zur Front der Bedieneinheit 5 parallele, horizontale Achse drehbar, wobei es ausgehend von einer Ausgangsposition entgegen einer Rückstellkraft bis in eine Endposition drehbar ist und bei einem Fehlen von Betätigungskräften durch die Rückstellkraft wieder in die Ausgangsposition zurückkehrt.

Die beiden Handräder 9a, 9b sind beide auf gleicher Höhe im unteren Bereich der Bedieneinheit angeordnet, wobei ein erstes 9a der beiden Handräder 9a, 9b auf der rechten Seite der Bedieneinheit 5, drehbar um eine zur Front der Bedieneinheit 5 parallele, horizontale Achse angeordnet ist und das zweite Handrad 9b links auf der Front der Bedieneinheit 5, drehbar um eine zu einer Seite der Bedieneinheit 5 parallele, horizontale Achse. Weiter weist die Steuerungseinheit angeordnet in der Bedieneinheit 5 Mittel der zur Ansteuerung der Vorschubeinrichtungen (nicht sichtbar) für die Verschiebung des Maschinenkopfes 1 entlang seiner beiden Verschiebeachsen Y, Z und für die Verschiebung des Maschinentisches 3 entlang seiner Verschiebeachse X auf und ist derart ausgestaltet, dass die Ansteuerung dieser Vorschubeinrichtungen wahlweise durch ein in der Steuereinrichtung gespeichertes Programm, durch manuelle Eingabe von Befehlen und/oder Daten in die Eingabeeinheit 8 oder manuell durch Bewegen des Betätigungsorgans 10 und der Betätigungselemente 9a, 9b erfolgen kann.

Dabei ist das Drehkreuz 10 der vertikalen Verschiebeachse Z des Maschinenkopfes 1, das erste Handrad 9a der Verschiebeachse X des Maschinentisches 3 und das zweite Handrad 9b der horizontalen Verschiebeachse Y des Maschinenkopfes 1 zugeordnet, so dass im manuellen Betrieb die horizontalen Relativbewegungen zwischen Werkzeug 2 und Werkstück mittels der beiden Handräder 9a, 9b bewirkbar sind und die Relativbewegungen in vertikaler Richtung mittels des Drehkreuzes 10.

Sofern sich kein Widerspruch mit zuvor beschriebenen technischen Merkmalen der erfindungsgemässen Werkzeugmaschine aus Fig. 1 ergibt, weist die Steuerungseinheit dieser Werkzeugmaschine sämtliche Eigenschaften der unter dem ersten Aspekt der Erfindung beschriebenen Ausführungsformen der erfindungsgemässen Steuerungseinheit auf und ist zudem auch in der Lage, einen Betrieb der Werkzeugmaschine gemäss sämtlichen unter dem dritten und vierten Aspekt der Erfindung dargelegten Betriebsverfahren zu ermöglichen.

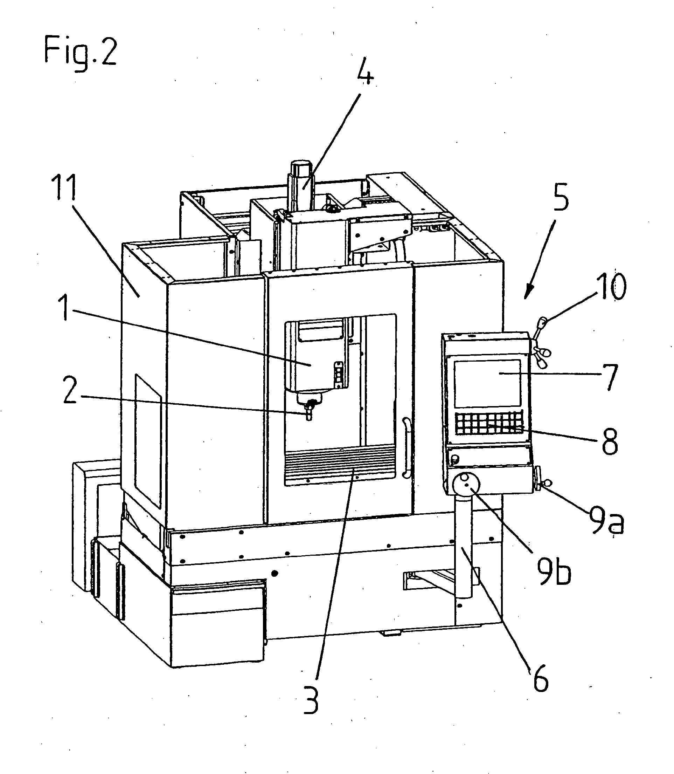

Fig. 2 zeigt eine zweite erfindungsgemässe Werkzeugmaschine in Form einer dreiachsigen CNC-Bearbeitungsmaschine in einer perspektivischen Ansicht, welche sich von der in Fig. 1 dargestellten Werkzeugmaschine lediglich dadurch unterscheidet, dass hier der gesamte Bearbeitungsbereich von einer spritzwasserdichten und schallabsorbierenden Kabine 11 umgeben ist.

## Patentansprüche

1. Computergestützte Steuereinrichtung für eine Werkzeugmaschine zur Bearbeitung eines Werkstücks mit einem rotierenden Werkzeug (2), bei welcher das Werkzeug (2) in einem Maschinenkopf (1) aufgenommen ist, der mittels einer motorischen Vorschubeinrichtung entlang einer parallel zur Rotationsachse des Werkzeugs (2) verlaufenden Verschiebeachse (Z) verfahrbar ist, zum Verfahren des Werkzeugs (2) entlang seiner Rotationsachse, umfassend:
a) einen Bildschirm (7) zur Darstellung von steuerungsrelevanten Informationen;
b) eine Eingabeeinheit (8) zur Eingabe von steuerungsrelevanten Befehlen und/oder Daten;
c) ein Betätigungsorgan (10), das von Hand ergriffen und bewegt werden kann; sowie
d) Mittel zur Ansteuerung der Vorschubeinrichtung des Maschinenkopfes (1) zwecks Bewirkung eines Verfahrens des Maschinenkopfes (1) entlang der zur Rotationsachse des Werkzeugs (2) parallelen Verschiebeachse (Z);
wobei die Steuereinrichtung derartig ausgebildet ist, dass die Ansteuerung der Vorschubeinrichtung des Maschinenkopfes (1) zur Verschiebung des Maschinenkopfes (1) entlang der zur Rotationsachse des Werkzeugs (2) parallelen Verschiebeachse (Z) wahlweise durch ein in der Steuereinrichtung gespeichertes Programm, durch manuelle Eingabe von Befehlen und/oder Daten in die Eingabeeinheit (8) oder manuell durch Bewegen des Betätigungsorgans (10) erfolgen kann,
**dadurch gekennzeichnet, dass** die Steuereinrichtung derartig ausgebildet ist, dass sie wahlweise einen Betriebsmodus zur Verfügung stellt, in welchem der Maschinenkopf (1) von einer definierten Ausgangsposition durch Bewegen des Betätigungsorgans (10) lediglich über einen zuvor über die Eingabeeinheit (8) eingegebenen Verschiebeweg entlang der zur Rotationsachse des Werkzeugs (2) parallelen Verschiebeachse (Z) verschiebbar ist.

2. Steuereinrichtung nach Anspruch 1, **dadurch gekennzeichnet, dass** der Bildschirm (7), die Eingabeeinheit (8) und das Betätigungsorgan (10) von einer zusammenhängenden Bedieneinheit (5) gebildet sind.

3. Steuereinrichtung nach Anspruch 2, **dadurch gekennzeichnet, dass** das Betätigungsorgan (10) auf einer der beiden Seiten der Bedieneinheit (5), bevorzugterweise auf der rechten Seite der Bedieneinheit (5) angeordnet ist.

4. Steuereinrichtung nach Anspruch 3, **dadurch gekennzeichnet, dass** das Betätigungsorgan (10) drehbar um eine zur Front der Bedieneinheit (5) parallele, horizontale Achse ist.

5. Steuereinrichtung nach einem der vorangehenden Ansprüche, **dadurch gekennzeichnet, dass** das Betätigungsorgan (10) ausgehend von einer Ausgangsposition entgegen einer Rückstellkraft bis in eine Endposition bewegbar ist und bei einem Fehlen von Betätigungskräften durch die Rückstellkraft wieder in die Ausgangsposition zurückkehrt.

6. Steuereinrichtung nach einem der vorangehenden Ansprüche, **dadurch gekennzeichnet, dass** das Betätigungsorgan (10) ein Hebel ist, der verdreh- oder verschwenkbar ist, und insbesondere, dass der Hebel von einem um eine Rotationsachse verdrehbaren Drehkreuz (10) gebildet ist.

7. Steuereinrichtung nach einem der vorangehenden Ansprüche, **dadurch gekennzeichnet, dass** in dem Betriebsmodus, in welchem der Maschinenkopf (1) von einer definierten Ausgangsposition durch Bewegen des Betätigungsorgans (10) lediglich über einen zuvor über die Eingabeeinheit (8) eingegebenen Verschiebeweg entlang der zur Rotationsachse des Werkzeugs (2) parallelen Verschiebeachse (Z) verschiebbar ist, nach dem Verfahren des Maschinenkopfes (1) über den eingegebenen Verschiebeweg durch Bewegen des Betätigungsorgans (10),
a) das Betätigungsorgan (10) in derselben Betätigungsrichtung weiter bis in eine Endposition bewegbar ist, in welcher seine Bewegung durch einen Anschlag begrenzt oder durch erhöhte Betätigungskräfte erschwert wird,
b) der Maschinenkopf (1) durch ein Zurückbewegen des Betätigungsorgans (10) von der Endposition in umgekehrter Betätigungsrichtung, insbesondere in seine ursprüngliche Position, zurück in seine Ausgangsposition bewegbar ist und
c) bei einem erneuten Bewegen des Betätigungsorgans (10) in der Betätigungsrichtung bis in die Endposition der Maschinenkopf (1) erneut von der Ausgangsposition über den eingegebenen Verschiebeweg verfahren wird, jedoch derart, dass er diesen Verschiebeweg erst dann zurückgelegt hat, wenn das Betätigungsorgan (10) die Endposition erreicht hat.

8. Steuereinrichtung nach einem der vorangehenden Ansprüche, **dadurch gekennzeichnet, dass** die Steuereinrichtung derartig ausgebildet ist, dass in dem Betriebsmodus, in welchem der Maschinenkopf (1) von einer definierten Ausgangsposition durch Bewegen des Betätigungsorgans (10) lediglich über einen zuvor über die Eingabeeinheit (8) eingegebenen Verschiebeweg entlang der zur Rotationsachse des Werkzeugs (2) parallelen Verschiebeachse (Z) verschiebbar ist, der Maschinenkopf (1) nach einem Verschieben über diesen Verschiebeweg durch Bewegen des Betätigungsorgans (10) bei einem anschliessenden Zurückbewegen des Betätigungsorgans (10) in umgekehrter Betätigungsrichtung in der zuvor erreichten Verschiebeposition verbleibt.

9. Steuereinrichtung nach einem der vorangehenden Ansprüche, **dadurch gekennzeichnet, dass** die Steuereinrichtung derartig ausgebildet ist, dass in dem Betriebsmodus, in welchem der Maschinenkopf (1) von einer definierten Ausgangsposition durch Bewegen des Betätigungsorgans (10) lediglich über einen zuvor über die Eingabeeinheit (8) eingegebenen Verschiebeweg entlang der zur Rotationsachse des Werkzeugs (2) parallelen Verschiebeachse (Z) verschiebbar ist, der Maschinenkopf (1) nach einem Verschieben entlang dieses Verschiebewegs durch Bewegen des Betätigungsorgans (10) bei einem Zurückbewegen des Betätigungsorgans (10) in umgekehrter Betätigungsrichtung in umgekehrter Richtung verschoben wird für den Fall, dass der eingegebene Verschiebeweg noch nicht erreicht wurde, oder in der erreichten Verschiebeposition verbleibt für den Fall, dass der eingegebene Verschiebeweg erreicht wurde.

10. Steuereinrichtung nach einem der vorangehenden Ansprüche für eine Werkzeugmaschine, bei welcher eine Relativbewegung zwischen Werkstück und Werkzeug (2) entlang zweier unter einem insbesondere rechten Winkel zueinander und unter einem insbesondere rechten Winkel zur Rotationsachse des Werkzeugs verlaufender Verschiebeachsen (X, Y) mittels motorischer Vorschubeinrichtungen bewirkbar ist, des weiteren umfassend zwei Betätigungselemente (9a, 9b), von denen jedes einer der beiden Verschiebeachsen (X, Y) zugeordnet ist und welche von Hand ergriffen und bewegt werden können, wobei die Steuereinrichtung derartig ausgebildet ist, dass die Ansteuerung der Vorschubeinrichtungen der beiden Verschiebeachsen (X, Y) zwecks Bewirkung der Relativbewegungen zwischen Werkstück und Werkzeug (2) je Verschiebeachse (X; Y) wahlweise durch ein in der Steuereinrichtung gespeichertes Programm, durch manuelle Eingabe von Befehlen und/oder Daten in die Eingabeeinheit (8) oder manuell durch Bewegen des zugeordneten Betätigungselements (9a; 9b) erfolgen kann.

11. Steuereinrichtung nach Anspruch 10, **dadurch gekennzeichnet, dass** die Betätigungselemente als Handräder (9a, 9b) ausgebildet sind.

12. Steuereinrichtung nach einem der Ansprüche 10 bis 11 und nach Anspruch 2, **dadurch gekennzeichnet**, dass die Betätigungselemente (9a, 9b) von der zusammenhängenden Bedieneinheit (5) gebildet sind.

13. Steuereinrichtung nach Anspruch 12, **dadurch gekennzeichnet, dass** von den beiden Betätigungselementen (9a, 9b) für die beiden Verschiebeachsen (X, Y) ein erstes Betätigungselement (9a) auf einer der beiden Seiten der Bedieneinheit, bevorzugterweise auf der rechten Seite der Bedieneinheit, drehbar um eine zur Front der Bedieneinheit (5) parallele, horizontale Achse angeordnet ist und das zweite Betätigungselement (9b) auf der Front der Bedienungseinheit (5) drehbar um eine zu einer Seite der Bedieneinheit (5) parallele, horizontale Achse angeordnet ist.

14. Steuereinrichtung nach Anspruch 13, **dadurch gekennzeichnet, dass** die beiden Betätigungselemente (9a, 9b) für die beiden Verschiebeachsen (X, Y) insbesondere auf gleicher Höhe im Bereich des unteren Endes der Bedieneinheit (5) angeordnet sind und das Betätigungsorgan (10) für die Verschiebung des Maschinenkopfes (1) entlang der zur Rotationsachse des Werkzeugs (2) parallelen Verschiebeachse (Z) im Bereich des oberen Endes der Bedieneinheit (5) angeordnet ist.

15. Werkzeugmaschine zur Bearbeitung eines Werkstücks mit einem rotierenden Werkzeug (2) mit einer Steuereinrichtung nach einem der vorangehenden Ansprüche, bei welcher das Werkzeug (2) in einem Maschinenkopf (1) aufgenommen oder aufnehmbar ist, der mit der Steuereinrichtung wahlweise durch ein in der Steuereinrichtung gespeichertes Programm, durch manuelle Eingabe von Befehlen und/oder Daten in die Eingabeeinheit (8) oder manuell durch Bewegen des Betätigungsorgans (10) verschiebbar ist.

16. Werkzeugmaschine nach Anspruch 15 mit einer Steuereinrichtung nach einem der Ansprüche 10 bis 14, **dadurch gekennzeichnet, dass** die Werkzeugmaschine einen Maschinentisch aufweist, der mit der Steuereinrichtung wahlweise durch ein in der Steuereinrichtung gespeichertes Programm, durch manuelle Eingabe von Befehlen und/- oder Daten in die Eingabeeinheit oder manuell durch Bewegen der beiden Betätigungselemente entlang zweier unter einem rechten Winkel zueinander und unter einem rechten Winkel zur Rotationsachse des Werkzeugs verlaufender Verschiebeachsen verschiebbar ist.

17. Werkzeugmaschine nach Anspruch 15 mit einer Steuereinrichtung nach einem der Ansprüche 10 bis 14, **dadurch gekennzeichnet, dass** die Werkzeugmaschine einen Maschinentisch (3) aufweist, der mit der Steuereinrichtung wahlweise durch ein in der Steuereinrichtung gespeichertes Programm, durch manuelle Eingabe von Befehlen und/oder Daten in die Eingabeeinheit (8) oder manuell durch Bewegen eines der beiden Betätigungselemente (9a) entlang einer unter einem rechten Winkel zur Rotationsachse des Werkzeugs (2) verlaufenden Verschiebeachse (X) verschiebbar ist und bei welcher der Maschinenkopf (1) mit der Steuereinrichtung wahlweise durch ein in der Steuereinrichtung gespeichertes Programm, durch manuelle Eingabe von Befehlen und/oder Daten in die Eingabeeinheit (8) oder manuell durch Bewegen des anderen Betätigungselements (9b) entlang einer unter einem rechten Winkel zur Rotationsachse des Werkzeugs und unter einem rechten Winkel zur Verschiebeachse (X) des Maschinentisches (3) verlaufenden Verschiebeachse (Y) verschiebbar ist.

18. Werkzeugmaschine nach einem der Ansprüche 15 bis 17, wobei die Steuereinrichtung eine Bedieneinheit (5) aufweist, welche den Bildschirm (7), die Eingabeeinheit (8), das Betätigungsorgan (10) und, falls vorhanden, die beiden Betätigungselemente (9a, 9b) bildet, **dadurch gekennzeichnet, dass** die Bedieneinheit (5) derartig positioniert oder positionierbar ist, dass der Bediener beim Bedienen der Bedieneinheit den zwischen dem Maschinentisch (3) und dem Bearbeitungskopf (1) gebildeten Bearbeitungsraum visuell überwachen kann.

19. Verfahren zum Betrieb einer Werkzeugmaschine nach einem der Ansprüche 16 bis 17, zur Erzeugung mehrerer identischer Bohrungen in einem auf dem Maschinentisch (3) der Werkzeugmaschine aufgespannten Werkstück, umfassend die Schritte:
a) Anfahren einer gewünschten ersten Bohrposition über dem Werkstück wahlweise durch ein in der Steuereinrichtung gespeichertes Programm, durch manuelle Eingabe von Befehlen und/oder Daten in die Eingabeeinheit (8) oder manuell durch Bewegen mindestens eines der beiden Betätigungselemente (9a, 9b);
b) Aufsetzen eines im Maschinenkopf (1) aufgenommenen Bohrwerkzeugs auf dem Werkstück durch Verschieben des Maschinenkopfes (1) entlang der zur Rotationsachse des Werkzeugs parallelen Verschiebeachse (Z) durch Bewegen des Betätigungsorgans (10);
c) Speichern der Verschiebeposition des Maschinenkopfes (1) bei aufgesetztem Bohrwerkzeug;
d) Eingeben einer gewünschten Bohrtiefe über die Eingabeeinheit (8);
e) Bohren einer ersten Bohrung an der ersten Bohrposition durch Bewegen des Betätigungsorgans (10) in eine Betätigungsrichtung, wobei die Verschiebebewegung des Maschinenkopfes (1) bei Erreichen der eingegebenen Bohrtiefe von der Steuereinrichtung gestoppt wird während das Betätigungsorgan (10) weiter in der Betätigungsrichtung bewegt wird, bis seine Bewegung in einer Endposition von einem Anschlag begrenzt wird oder durch erhöhte Betätigungskräfte erschwert wird;
f) Zurückverschieben des Maschinenkopfes (1) durch Bewegen des Betätigungsorgans (10) von der Endposition in einer der Betätigungsrichtung entgegen gesetzten Richtung, bis das Bohrwerkzeug vollständig aus dem gebohrten ersten Loch entfernt und über dem Werkstück angeordnet ist;
g) Anfahren einer gewünschten zweiten Bohrposition wahlweise durch ein in der Steuereinrichtung gespeichertes Programm, durch manuelle Eingabe von Befehlen und/oder Daten in die Eingabeeinheit (8) oder manuell durch Bewegen mindestens eines der beiden Betätigungselemente (9a, 9b); und
e) Bohren einer zweiten Bohrung an der zweiten Bohrposition durch erneutes Bewegen des Betätigungsorgans (10) in der Betätigungsrichtung bis in die Endposition, wobei die Verschiebebewegung des Maschinenkopfes (1) von der Steuerungseinrichtung derartig gesteuert wird, dass die eingegebenen Bohrtiefe bei dieser Bohrung erst dann erreicht ist, wenn das Betätigungsorgan (10) die Endposition erreicht hat.

20. Verfahren nach Anspruch 19, **dadurch gekennzeichnet, dass** zumindest die zweite Bohrposition und allfällige weitere Bohrpositionen durch ein in der Steuereinrichtung gespeichertes Programm angefahren werden, wobei das Anfahren der jeweils nächsten Bohrposition durch Eingabe eines Befehls über die Eingabeeinheit (8) und/oder durch Erreichen einer bestimmten Verschiebeposition des Maschinenkopfes (1) beim Zurückverschieben nach dem Einbringen der vorherigen Bohrung in das Werkstück ausgelöst wird.

21. Verfahren zum Betrieb einer Werkzeugmaschine nach einem der Ansprüche 16 bis 17, zur Durchführung von Fräsarbeiten an einem auf dem Maschinentisch (3) der Werkzeugmaschine aufgespannten Werkstück, umfassend die Schritte:
a) Aufsetzen eines im Maschinenkopf (1) aufgenommenen Fräswerkzeugs (2) auf dem Werkstück durch Verschieben des Maschinenkopfes (1) entlang der zur Rotationsachse des Werkzeugs (2) parallelen Verschiebeachse (Z) durch Bewegen des Betätigungsorgans (10);
b) Speichern der Verschiebeposition des Maschinenkopfes (1) bei aufgesetztem Fräswerkzeug (2);
c) Eingeben einer gewünschten Frästiefe über die Eingabeeinheit (8);
d) Anfahren einer gewünschten Fräsposition über dem Werkstück oder einer Position neben dem Werkstück wahlweise durch ein in der Steuereinrichtung gespeichertes Programm, durch manuelle Eingabe von Befehlen und/oder Daten in die Eingabeeinheit (8) oder manuell durch Bewegen mindestens eines der beiden Betätigungselemente (9a, 9b);
e) Verschieben des Maschinenkopfes (1), gegebenenfalls unter einem Eintauchen des Fräswerkzeuges (2) in das Werkstück, auf das Werkstück zu durch Bewegen des Betätigungsorgans (10) in eine Betätigungsrichtung, wobei die Verschiebebewegung des Maschinenkopfes (1) bei Erreichen der eingegebenen Frästiefe von der Steuereinrichtung gestoppt wird;
f) Bewegen des Betätigungsorgans (10) in einer der Betätigungsrichtung entgegen gesetzten Richtung, wobei der Maschinenkopf (1) in der Verschiebeposition, in welcher seine Verschiebebewegung von der Steuereinrichtung gestoppt wurde, verbleibt; und
g) Ausführen von Fräsarbeiten bei in dieser Verschiebeposition angeordnetem Maschinenkopf (1) durch Erzeugen einer Relativbewegung zwischen Werkzeug (2) und Werkstück wahlweise durch ein in der Steuereinrichtung gespeichertes Programm, durch manuelle Eingabe von Befehlen und/oder Daten in die Eingabeeinheit (8) oder manuell durch Bewegen mindestens eines der beiden Betätigungselemente (9a, 9b).

## Claims

1. Computer-aided controlling device for a machine tool for machining a workpiece with a rotating tool (2), the tool (2) being received in a machine head (1) which is shiftable along a shifting axis (z) which is parallel to the rotation axis of the tool (2) by means of a motor-driven shifting device, for shifting the tool (2) along its rotation axis, comprising:
a) a display (7) for showing controlling-relevant information;
b) an input unit (8) for inputting controlling-relevant commands and/or data;
c) an actuating member (10) which can be gripped by hand and moved; as well as
d) means for controlling the shifting device of the machine head (1) for achieving a shifting the machine head (1) along the shifting axis (z) which is parallel to the rotation axis of the tool (2);
wherein the controlling device is designed in such a way that the controlling of the shifting device of the machine head (1) for shifting the machine head (1) along the shifting axis (z) which is parallel to the rotation axis of the tool (2) is done optionally by a program stored in the controlling device, by manual input of commands and/or data into the input unit (8) or manually by moving the actuating member (10),
**characterized in that** the controlling device is adapted to optionally provide an operating mode in which the machine head (1) is shiftable along the shifting axis (z) which is parallel to the rotation axis of the tool (2) only along a shifting path which was previously inputted into the input unit (8).

2. Controlling device according to claim 1, **characterized in that** the display (7), the input unit (8) and the actuating member (10) are formed by a joined operating unit (5).

3. Controlling device according to claim 2, **characterized in that** the actuating member (10) is arranged on one of the two sides of the operating unit (5), preferably on the right side of the operating unit (5).

4. Controlling device according to claim 3, **characterized in that** the actuating member (10) is rotatable about an axis which is horizontal and parallel to the front face of the actuating organ (5).

5. Controlling device according to one of the preceding claims, **characterized in that** the actuating member (10) is movable from an initial position against a restoring force up to an end position and is moved back into the initial position by the restoring force in case no actuating forces are present.

6. Controlling device according to one of the preceding claims, **characterized in that** the actuating member (10) is a lever which is rotatable or can be pivoted, and particularly in that the lever is formed by a turret (10) which is pivotable about a rotation axis.

7. Controlling device according to one of the preceding claims, **characterized in that**, in the operating mode, in which the machine head (1) is shiftable along the shifting axis (z) which is parallel to the rotation axis of the tool (2) from a defined initial position by moving the actuating member (10) only along a shifting path which was previously inputted into the input unit (8), after shifting the machine head (1) via the inputted shifting path by moving the actuating member (10),
a) the actuating member (10) is movable farther in the same actuating direction up to an end position where its motion is limited by an abutting member or is made difficult by increased actuating forces,
b) the machine head (1) is movable from the end position back into its initial position in opposite actuating direction, particularly in its initial position, by moving back the actuating member (10) and
c) in case of another motion of the actuating member (10) in the actuating direction up to the end position, the machine head (1) is shifted again from the initial position via the inputted shifting path, however in such a way that it has travelled this entire path only when the actuating member (10) has reached its end position.

8. Controlling device according to one of the preceding claims, **characterized in that** the controlling device is formed in such a way that in the operating mode, in which the machine head (1) is shiftable along the shifting axis (z) which is parallel to the rotation axis of the tool (2) from a defined initial position by moving the actuating member (10) only along a shifting path which was previously inputted into the input unit (8), the machine head (1) remains in the previously reached shifting position after shifting along this shifting path by moving the actuating member (10) in opposite moving direction.

9. Controlling device according to one of the preceding claims, **characterized in that** the controlling device is formed in such a way that in the operating mode, in which the machine head (1) is shiftable along the shifting axis (z) which is parallel to the rotation axis of the tool (2) from a defined initial position by moving the actuating organ (10) only along a shifting path which was previously inputted into the input unit (8), the machine head (1) is shifted in the opposite direction, after having shifted it along this shifting path, by moving the actuating member (10) back in opposite actuating direction in case the end of the inputted shifting path has not yet been reached, or it remains in the reached shifting position in case the end of the inputted shifting path has been reached.

10. Controlling device according to one of the preceding claims for a machine tool, in case of which a relative motion between workpiece and tool (2) along two shifting axes (X, Y) running at an angle, particularly of 90°, with respect to one another and at an angle, particularly of 90°, with respect to the rotation axis of the tool, is carried out by means of motor-driven shifting devices, furthermore comprising two actuating elements (9a, 9b) of which each one is attributed to one of the shifting axes (X, Y) and which can be gripped and actuated by hand, wherein the control device is formed such that the controlling of the shifting devices of the two shifting axes (X, Y) for obtaining the relative motions between workpiece and tool (2), is done optionally by a program stored in the controlling device, by manual input of commands and/or data into the input unit (8) or manually by moving the attributed actuating element (9a; 9b).

11. Controlling device according to claim 10, **characterized in that** the actuating elements are formed as hand wheels (9a, 9b).

12. Controlling device according to one of the claims 10 to 11 and claim 2, **characterized in that** the actuating elements (9a, 9b) are formed by the operating unit (5).

13. Controlling device according to claim 12, **characterized in that** a first actuating element (9a) of the two actuating elements (9a, 9b) for the shifting axes (X, Y) is arranged on one of the two sides of the operating unit, preferably on the right side of the operating unit, and rotatably about a horizontal axis which is parallel to the front face of the operating unit (5) and the second actuating element (9b) is arranged on the front of the operating unit (5) and rotatably about a horizontal axis which is parallel to the side of the operating unit.

14. Controlling device according to claim 13, **characterized in that** both actuating elements (9a, 9b) for both shifting axes (X, Y) are arranged particularly at the same height in the area of the lower end of the operating unit (5) and the actuating member (10) for shifting the machine head (1) along the shifting axis (z) which is parallel to the rotation axis (z) of the tool (2) is arranged in the area of the upper end of the operating unit (5).

15. Machine tool for machining a workpiece with a rotating tool (2) with a controlling device according to one of the preceding claims, for which the tool (2) is received or can be received in a machine head (1) which is shiftable by the controlling device optionally by a program stored in the controlling device, by manual input of commands and/or data into the input unit (8) or manually by moving the actuating member (10).

16. Machine tool according to claim 15, with a controlling device according to one of the claims 10 to 14, **characterized in that** the machine tool has a machine table which is shiftable by the controlling device optionally by a program stored in the controlling device, by manual input of commands and/or data into the input unit (8) or manually by moving both actuating elements along two shifting axes which are perpendicular to one another and perpendicular to the rotation axis of the tool.

17. Machine tool according to claim 15 with a controlling device according to one of the claims 10 to 14, **characterized in that** the machine tool has a machine table (3) which is shiftable by the controlling device optionally by a program stored in the controlling device, by manual input of commands and/or data into the input unit (8) or manually by moving one of the two actuating elements (9a) along a shifting axis (X) which is perpendicular to the rotation axis of the tool (2) and for which the machine head (1) is shiftable by the controlling device optionally by a program stored in the controlling device, by manual input of commands and/or data into the input unit (8) or manually by moving the other actuating element (9b) along a shifting axis (Y) which is perpendicular to the rotation axis of the tool and perpendicular to the shifting axis (X) of the machine table (3).

18. Machine tool according to one of the claims 15 to 17, wherein the controlling device has an operating unit (5) which forms the display (7), the input unit (8), the actuating member (10) and, if present, both actuating elements (9a, 9b), **characterized in that** the operating unit (5) is positioned or can be positioned in such a way that the operator can visually supervise the machining space between the machine table (3) and the operating head (1) while operating the operating unit.

19. Method for operating a machine tool according to one of the claims 16 to 17, for creating a plurality of identical bore holes in a workpiece fixed on the machine table (3) of the machine tool, comprising the steps of:
a) driving to a certain first bore position above the workpiece optionally by a program stored in the controlling device, by manual input of commands and/or data into the input unit (8) or manually by moving the at least one of the two actuating elements (9a, 9b);
b) positioning a bore tool located in the machine head (1) onto the workpiece by shifting the machine head (1) along the shifting axis (z) which is parallel to the rotation axis of the tool by moving the actuating member (10);
c) storing the shifting position of the machine head (1) when the bore tool has been positioned;
d) inputting the desired bore depth via the input unit (8);
e) drilling a first bore at the first bore position by moving the actuating member (10) in an actuating direction, wherein the shifting motion of the machine head (1) is stopped by the controlling device when the inputted bore depth has been reached, while the actuating member (10) is moved further in the actuating direction, until its motion is limited by an abutting member or is made difficult by increased actuating forces;
f) shifting back the machine head (1) by moving the actuating member (10) from the end position in a direction opposite of the actuating direction, until the bore tool is entirely removed from the drilled first hole and is arranged above the workpiece;
g) driving to a desired second bore position optionally by a program stored in the controlling device, by manual input of commands and/or data into the input unit (8) or manually by moving at least one of the two actuating elements (9a, 9b); and
h) drilling a second bore at the second bore position by moving the actuating member (10) again in the actuating direction up to the end position, wherein the shifting motion of the machine head (1) is controlled by the controlling device in such a way that in case of this bore the inputted bore depth is only reached when the actuating member (10) has reached the end position.

20. Method according to claim 19, **characterized in that** at least the second bore position and further bore positions, as the case may be, are reached by a program stored in the controlling device, wherein driving to the next bore position is triggered by inputting a command via the input unit (8) and/or by reaching a certain shifting position of the machine head (1) during shift back after having drilled the previous bore in the workpiece.

21. Method for operating a machine tool according to one of the claims 16 to 17, for carrying out milling operations to a workpiece fixed on the machine table (3) of the machine tool, comprising the steps of:
a) laying a milling tool (2) attached in the machine head (1) onto the workpiece by shifting the machine head (1) along the shifting axis which is parallel to the rotation axis of the tool (2) by moving the actuating member (10);
b) storing the shifting position of the machine head (1) with positioned milling tool (2);
c) inputting a desired milling depth via the input unit (8);
d) driving to a desired milling position above the workpiece or to a position beside the workpiece optionally by a program stored in the controlling device, by manual input of commands and/or data into the input unit (8) or manually by moving at least one of the two actuating elements (9a, 9b);
e) shifting the machine head (1), if necessary by diving the milling tool (2) into the workpiece, towards the workpiece by moving the actuating member (10) in an actuating direction, wherein the shifting motion of the machine head (1) is stopped by the controlling device when the inputted milling depth has been reached;
f) moving the actuating member (10) in a direction opposite to the actuating direction, wherein the machine head (1) remains in the shifting position where its shifting motion had been stopped by the controlling device; and
g) carrying out milling operations with the machine head (1) being arranged in this shifting position by generating a relative motion between the tool (2) and the workpiece optionally by a program stored in the controlling device, by manual input of commands and/or data into the input unit (8) or manually by moving at least one of the actuating elements (9a, 9b).

## Revendications

1. Dispositif de commande assisté par ordinateur pour un machine-outil pour usiner une pièce à usiner à l'aide d'un outil rotatif (2), l'outil (2) étant reçu dans une tête de machine (1) qui est déplaçable le long d'un axe de déplacement (z) parallèle à l'axe de rotation de l'outil (2) à l'aide d'un dispositif de déplacement actionné par un moteur, afin de déplacer l'outil (2) le long de son axe de rotation, comprenant:
a) un écran (7) pour montrer des informations liées à la commande;
b) une unité d'entrée (8) pour entrer des commandes liées à la commande et/ou des données;
c) un membre d'actionnement (10) capable d'être agrippé et bougé à main; ainsi que
d) des moyens pour commander le dispositif de déplacement de la tête de machine (1) le long d'un axe de déplacement (z) parallèle à l'axe de rotation de l'outil (2) ;
le dispositif de commande étant conçu de sorte que la commande du dispositif de déplacement de la tête de machine (1) pour déplacer la tête de machine (1) le long de l'axe de déplacement (z) parallèle à l'axe de rotation de l'outil (2) est réalisée optionnellement par un logiciel sauvegardé dans le dispositif de commande, par entrée manuelle des commandes et/ou des données dans l'unité d'entrée (8) ou manuellement en bougeant le membre d'actionnement (10),
**caractérisé en ce que** le dispositif de commande est adapté à mettre à disposition un mode d'opération dans lequel la tête de machine (1) est déplaçable le long de l'axe de déplacement (z) parallèle à l'axe de rotation de l'outil (2) uniquement le long d'un chemin de déplacement antérieurement entré dans l'unité d'entrée (8).

2. Dispositif de commande selon la revendication 1, **caractérisé en ce que** l'écran (7), l'unité d'entrée (8) et le membre d'actionnement (10) sont formés par une unité d'opération (5) jointe.

3. Dispositif de commande selon la revendication 2, **caractérisé en ce que** le membre d'actionnement (10) est arrangé sur un des deux côtés latérales de l'unité d'opération (5), préférablement du côté droit de l'unité d'opération (5).

4. Dispositif de commande selon la revendication 3, **caractérisé en ce que** le membre d'actionnement (10) est rotatif autour d'un axe frontale horizontale et parallèle par rapport à la face de l'unité d'opération (5).

5. Dispositif de commande selon l'une des revendications précédentes, **caractérisé en ce que** le membre d'actionnement (10) est déplaçable à partir d'une position initiale contre une force de rappel jusqu'à une position finale et est déplacé en arrière dans la position initiale par la force de rappel en cas aucune force d'actionnement n'est pas présente.

6. Dispositif de commande selon l'une des revendications précédentes, **caractérisé en ce que** le membre d'actionnement (10) est une poignée rotative ou pivotable, et particulièrement en ce que la poignée est formée par une tourelle (10) pivotable autour d'un axe de rotation.

7. Dispositif de commande selon l'une des revendications précédentes, **caractérisé en ce que**, dans le mode d'opération dans lequel la tête de machine (1) est pivotable le long de l'axe de déplacement (z) parallèle à l'axe de rotation de l'outil (2) à partir d'une position initiale définie en déplaçant le membre d'actionnement (10) uniquement le long d'un chemin de déplacement antérieurement entré dans l'unité d'entrée (8), après avoir déplacé la tête de machine (1) sur le chemin de déplacement entré en déplaçant le membre d'actionnement (10),
a) le membre d'actionnement (10) est déplaçable plus loin dans la même direction d'actionnement jusqu'à une position finale ou son déplacement est limité par un élément de butée ou est rendu difficile par des forces d'actionnement plus élevées,
b) la tête de machine (1) est déplaçable à partir de sa position finale dans sa position initiale dans une direction opposée à la direction d'actionnement, particulièrement dans sa position initiale, en déplaçant en arrière le membre d'actionnement (10) et
c) en cas d'un nouveau déplacement du membre d'actionnement (10) dans la direction d'actionnement jusqu'à la position finale, la tête de machine (1) est déplacée de nouveau de la position initiale sur le chemin de déplacement, mais de sorte qu'elle a traversé le chemin entier uniquement quand le membre d'actionnement (10) a atteint sa position finale.

8. Dispositif de commande selon l'une des revendications précédentes, **caractérisé en ce que** le dispositif de commande est formé de sorte que, dans le mode d'opération dans lequel la tête de machine (1) est pivotable le long de l'axe de déplacement (z) parallèle à l'axe de rotation de l'outil (2) à partir d'une position initiale définie en déplaçant le membre d'actionnement (10) uniquement le long d'un chemin de déplacement antérieurement entré dans l'unité d'entrée (8), la tête de machine (1) reste dans la position de déplacement antérieurement atteinte après le déplacement le long du chemin de déplacement en déplaçant le membre d'actionnement (10) dans une direction de déplacement opposée.

9. Dispositif de commande selon l'une des revendications précédentes, **caractérisé en ce que** le dispositif de commande est formé de sorte que dans le mode d'opération dans lequel la tête de machine (1) est pivotable le long de l'axe de déplacement (z) parallèle à l'axe de rotation de l'outil (2) à partir d'une position initiale définie en déplaçant le membre d'actionnement (10) uniquement le long d'un chemin de déplacement antérieurement entré dans l'unité d'entrée (8), la tête de machine est déplacée dans la direction opposée, après le déplacement le long de ce chemin de déplacement, en déplaçant le membre d'actionnement (10) en arrière dans une direction de déplacement opposée à la direction d'actionnement en cas la fin du chemin de déplacement entré n'a encore pas été atteinte, ou elle reste dans la position de déplacement atteinte en cas la fin du chemin de déplacement entré a été atteinte.

10. Dispositif de commande selon l'une des revendications précédentes pour un machine-outil, pour lequel un déplacement relatif entre la pièce et l'outil (2) le long de deux axes de déplacement (X, Y) orientés à un angle, particulièrement de 90°, l'un par rapport à l'autre et à un angle, particulièrement de 90°, par rapport à l'axe de rotation de l'outil, est effectué à l'aide des dispositifs de déplacement à moteur, en outre comprenant deux éléments d'actionnement (9a, 9b) qui sont chacun attribués à un axe de déplacement (X, Y) et qui peuvent être agrippés est actionnés à main, le dispositif de commande étant formé de sorte que la commande des dispositifs de déplacement des deux axes de déplacement (X, Y), afin d'obtenir les déplacements relatifs entre la pièce et l'outil (2), est réalisée optionnellement par un logiciel sauvegardé dans le dispositif de commande, par entrée manuelle des commandes et/ou des données dans l'unité d'entrée (8) ou manuellement en bougeant l'élément d'actionnement attribué (9a, 9b).

11. Dispositif de commande selon la revendication 10, **caractérisé en ce que** les éléments d'actionnement sont des manivelles (9a, 9b).

12. Dispositif de commande selon l'une des revendications 10 à 11 et la revendication 2, **caractérisé en ce que** les éléments d'actionnement (9a, 9b) sont formés par l'unité d'opération (5).

13. Dispositif de commande selon la revendication 12, **caractérisé en ce qu'**un premier élément d'actionnement (9a) des deux éléments d'actionnement (9a, 9b) pour les axes de déplacement (X, Y) est arrangé sur l'un des deux côtés latérales de l'unité d'opération, préférablement du côté droit de l'unité d'opération, et il est rotatif autour d'un axe horizontal parallèle à la face frontale de l'unité d'opération (5) et le deuxième élément d'actionnement (9b) est arrangé sur la face frontale de l'unité d'opération (5) et il est rotatif autour d'un axe horizontal parallèle à la face latérale de l'unité d'opération.

14. Dispositif de commande selon la revendication 13, **caractérisé en ce que** les deux éléments d'actionnement (9a, 9b) pour les deux axes de déplacement (X, Y) sont arrangés particulièrement à la même hauteur dans la zone basse de l'unité d'opération (5) et le membre d'actionnement (10) pour déplacer la tête de machine (1) le long de l'axe de déplacement (z) parallèle à l'axe de rotation (z) de l'outil (2) est arrangé dans la zone haute de l'unité d'opération (5).

15. Machine-outil pour usiner une pièce avec un outil rotatif (2) avec un dispositif de commande selon l'une des revendications précédentes, l'outil étant reçu ou pouvant être reçu dans une tête de machine (1) déplaçable par le dispositif de commande optionnellement par un logiciel sauvegardé dans le dispositif de commande, par entrée manuelle des commandes et/ou des données dans l'unité d'entrée (8) ou manuellement en bougeant le membre d'actionnement (10).

16. Machine-outil selon la revendication 15, avec un dispositif de commande selon l'une des revendications 10 à 14, **caractérisé en ce que** le machine-outil a une table de machine déplaçable par le dispositif de commande optionnellement par un logiciel sauvegardé dans le dispositif de commande, par entrée manuelle des commandes et/ou des données dans l'unité d'entrée (8) ou manuellement en bougeant les deux éléments d'actionnement le long de deux axes de déplacement perpendiculaires l'un sur l'autre et perpendiculaires à l'axe de rotation de l'outil.

17. Machine-outil selon la revendication 15 avec un dispositif de commande selon l'une des revendications 10 à 14, **caractérisé en ce que** le machine-outil a une table de machine déplaçable par le dispositif de commande optionnellement par un logiciel sauvegardé dans le dispositif de commande, par entrée manuelle des commandes et/ou des données dans l'unité d'entrée (8) ou manuellement en bougeant un des deux éléments d'actionnement (9a) le long d'un axe de déplacement (X) perpendiculaire à l'axe de rotation de l'outil (2) et pour lequel la tête de machine (1) est déplaçable optionnellement par un logiciel sauvegardé dans le dispositif de commande, par entrée manuelle des commandes et/ou des données dans l'unité d'entrée (8) ou manuellement en bougeant l'autre élément d'actionnement (9b) le long d'un axe de déplacement (Y) perpendiculaire à l'axe de rotation de l'outil et perpendiculaire à l'axe de déplacement (X) de la table de machine (3).

18. Machine-outil selon l'une des revendications 15 à 17, l'unité de commande ayant une unité d'opération (5) formant l'écran (7), l'unité d'entrée (8), le membre d'actionnement (10) et, si présent, les deux éléments d'actionnement (9a, 9b), **caractérisé en ce que** l'unité d'opération (5) est positionnée ou peut être positionnée de sorte que l'opérateur soit capable de surveiller l'espace de machine entre la table de machine (3) et la tête d'opération (1) pendant l'opération de l'unité d'opération.

19. Procédé pour opérer un machine-outil selon l'une des revendications 16 à 17, pour créer une pluralité des trous identiques dans une pièce à usiner fixée sur la table de machine (3) du machine-outil, comprenant les étapes:
a) guider à une première position de perçage au-dessus de la pièce à usiner optionnellement par un logiciel sauvegardé dans le dispositif de commande, par entrée manuelle des commandes et/ou des données dans l'unité d'entrée (8) ou manuellement en bougeant au moins un des deux éléments d'actionnement (9a, 9b);
b) positionner un outil de perçage situé dans la tête de machine (1) sur la pièce à usiner en déplaçant la tête de machine (1) le long de l'axe de déplacement (z) parallèle à l'axe de rotation de l'outil en bougeant le membre d'actionnement (10);
c) sauvegarder la position de déplacement de la tête de déplacement (1) quand l'outil de perçage a été positionné;
d) entrer la profondeur souhaitée du trou à l'aide de l'unité d'entrée (8);
e) percer un premier trou à la première position de trou en bougeant le membre d'actionnement (10) dans une direction d'actionnement, le mouvement de déplacement de la tête de machine (1) étant arrêté par le dispositif de commande quand la profondeur souhaitée du trou a été atteinte, pendant que le membre d'actionnement est déplacé encore dans la direction d'actionnement, jusqu'à son mouvement est limité par un membre de butée ou est rendu difficile par des forces d'actionnement plus élevées;
f) déplacer en arrière la tête de machine (1) en bougeant le membre d'actionnement (10) de la position finale dans une direction opposée à la direction d'actionnement, jusqu'à l'outil de perçage est entièrement enlevé du premier trou percé et est arrangé au-dessus de la pièce à usiner;
g) avancer jusqu'à une deuxième position de trou souhaitée optionnellement par un logiciel sauvegardé dans le dispositif de commande, par entrée manuelle des commandes et/ou des données dans l'unité d'entrée (8) ou manuellement en bougeant au moins un des deux éléments d'actionnement (9a, 9b); et
h) percer un deuxième trou à la deuxième position de trou en bougeant le membre d'actionnement (10) de nouveau dans une direction d'actionnement jusqu'à la position finale, le mouvement de déplacement de la tête de machine (1) étant commandé par le dispositif de commande de sorte que dans le cas de ce trou la profondeur de trou entrée est uniquement atteinte quand le membre d'actionnement (10) a atteint la position finale.

20. Procédé selon la revendication 19, **caractérisé en ce qu'**au moins la deuxième position de trou et d'autres positions de trou, si nécessaire, sont atteintes par un programme sauvegardé dans le dispositif de commande, le déplacement jusqu'à la prochaine position de trou étant déclenchée par l'entrée d'une commande à l'aide de l'unité d'entrée (8) et/ou en arrivant à une certaine position de déplacement de la tête de machine (1) pendant le déplacement en arrière après avoir percé le trou antérieur dans la pièce à usiner.

21. Procédé pour opérer un machine-outil selon l'une des revendications 16 à 17, pour effectuer des opérations de fraisage à une pièce à usiner fixée sur la table de machine (3) du machine-outil, comprenant les étapes:
a) poser un outil de fraisage (2) attaché dans la tête de machine (1) sur la pièce à usiner en déplaçant la tête de machine (1) le long de l'axe de déplacement parallèle à l'axe de rotation de l'outil (2) en bougeant le membre d'actionnement (10);
b) sauvegarder la position de déplacement de la tête de machine (1) avec l'outil de fraisage (2) positionné;
c) entrer une profondeur souhaitée de fraisage à l'aide de l'unité d'entrée (8);
d) déplacer jusqu'à une position souhaitée de fraisage au-dessus de la pièce à usiner ou à une position à côté de la pièce à usiner optionnellement par un logiciel sauvegardé dans le dispositif de commande, par entrée manuelle des commandes et/ou des données dans l'unité d'entrée (8) ou manuellement en bougeant au moins un des deux éléments d'actionnement (9a, 9b);
e) déplacer la tête de machine (1), si nécessaire en plongeant l'outil de fraisage (2) dans la pièce à usiner, vers la pièce à usiner en bougeant le membre d'actionnement (10) dans une direction d'actionnement, le mouvement de déplacement de la tête de machine (1) étant arrêté par le dispositif de commande quand la profondeur entrée de fraisage a été atteinte;
f) déplacer le membre d'actionnement (10) dans une direction opposée à la direction d'actionnement, la tête de machine (1) restant dans la position de déplacement ou son mouvement de déplacement a été arrêté par le dispositif de commande; et
g) effectuer des opérations de fraisage avec la tête de machine (1) arrangée dans cette position de déplacement en générant un mouvement relatif entre l'outil (2) et la pièce à usiner optionnellement par un logiciel sauvegardé dans le dispositif de commande, par entrée manuelle des commandes et/ou des données dans l'unité d'entrée (8) ou manuellement en bougeant au moins un des deux éléments d'actionnement (9a, 9b).
